# EUROPÄISCHE PATENTSCHRIFT

(11) **EP 3 156 296 B1**
(45) Veröffentlichungstag und Bekanntmachung des Hinweises auf die Patenterteilung: **03.01.2018**
(21) Anmeldenummer: 16002073.1
(22) Anmeldetag: 26.09.2016
(51) Int. Cl.: B60T 17/00, B01D 53/26

(54) **VORRICHTUNG ZUR LÖSBAREN BEFESTIGUNG EINER TROCKENMITTELPATRONE AN EINEM GEHÄUSEABSCHNITT EINER DRUCKLUFTAUFBEREITUNGSANLAGE EINES FAHRZEUGS**
DEVICE FOR REMOVABLY ATTACHING A DESICCANT CARTRIDGE ON A HOUSING SECTION OF A COMPRESSED AIR TREATMENT SYSTEM OF A VEHICLE
DISPOSITIF DE FIXATION AMOVIBLE D'UNE CARTOUCHE D'AGENT SICCATIF SUR UNE SECTION DE BOITIER D'UNE INSTALLATION DE TRAITEMENT D'AIR COMPRIME D'UN VÉHICULE AUTOMOBILE

(30) Priorität: 16.10.2015 DE 102015013491
(43) Veröffentlichungstag der Anmeldung: 19.04.2017
(73) Patentinhaber: MAN Truck & Bus AG, 80995 München (DE)
(72) Erfinder: Kaupert, Oliver, 80995 München (DE); Kolland, Wolfgang, 81245 München (DE); Haslberger, Georg, 84437 Reichertsheim (DE); Hofstetter, Thomas, 84048 Mainburg (DE)
(74) Vertreter: v. Bezold & Partner Patentanwälte - PartG mbB

(56) Entgegenhaltungen:
- EP-A1- 2 581 131
- WO-A2-2007/056589
- DE-A1-102010 010 882
- US-A- 3 695 437
- US-A1- 2003 110 949
- US-A1- 2013 036 912

## Beschreibung

Die Erfindung betrifft eine Vorrichtung zur lösbaren Befestigung einer Trockenmittelpatrone an einem Gehäuseabschnitt einer Druckluftaufbereitungsanlage eines Fahrzeugs, insbesondere eines Nutzfahrzeugs.
Druckluftsysteme - insbesondere in Nutzfahrzeugen - benötigen nachgeschaltet zum Luftpresser eine sogenannte Luftaufbereitungsanlage. Darin wird die Luft u. a. getrocknet und gefiltert, und es werden Ölbestandteile abgeschieden. Diese Vorgänge finden alle in einer sogenannten Trockenmittelpatrone statt, die, grob gesagt, aus einer Bodenplatte mit Öffnungen zur Durchströmung der Luft und einem becher- oder topfförmigen Deckel besteht, die fest miteinander verbunden sind. Darin befindet sich ein feuchtigkeitsadsorbierendes Granulat, das der durchströmenden Luft die Feuchtigkeit entzieht. Dieses Granulat hat beim Einsatz im Nutzfahrzeug nur eine begrenzte Lebensdauer. Ein Grund hierfür ist, dass sich der in der Druckluft enthaltene Ölnebel auf dem Granulat absetzt und so die für die Feuchtigkeitsaufnahme effektive Oberfläche reduziert. Ferner kann sich das Granulat durch die Rüttelbeanspruchung mechanisch zersetzen. Die Trockenmittelpatrone muss daher regelmäßig getauscht werden.
Typischerweise ist dafür die Patrone mit einem Mutterngewinde in der Bodenplatte versehen. So lässt sich die verbrauchte Patrone ab- und eine neue Patrone auf ein Außengewinde am Gehäuse der Druckluftaufbereitungsanlage, z. B. am Lufttrocknergehäuse, aufschrauben. Meist wird ein Vierkantdichtring verwendet, der durch die Verschraubung axial verpresst wird, so abdichtet und gleichzeitig die axiale Verspannung der Verschraubung sicherstellt. Derartige Trockenmittelpatronen sind beispielsweise aus den Offenlegungsschriften US 2014 036912 A1, DE 10 2013 103 066 A1, DE 10 2012 105 137 A1 sowie der DE 10 2007 034 435 A1 bekannt.
Abhängig vom Einbauort der Druckluftaufbereitungsanlage ist oft die Zugänglichkeit der Patrone beim Wechsel eingeschränkt. Die Patrone ist immer oben auf dem Gehäuse der Druckluftaufbereitungsanlage befestigt, deswegen wäre die optimale Zugangsrichtung für den Patronentausch von oben. Diese Freigängigkeit ist aber nicht immer gegeben, bedingt durch Aufbauten bei LKWs oder generell bei Bussen. Außerdem wird oft von unten her gearbeitet, wenn das Fahrzeug in der Werkstatt auf der Grube steht.

Es gibt heute teilweise sehr festsitzende Patronen, bei denen die vorgegebenen Servicezeiten für den Patronentausch in der Werkstatt nicht eingehalten werden können. Man benötigt ein sehr hohes Lösemoment, welches trotz Hilfsmittel, wie z. B. einem Spanngurt mit einem langen Hebel, schwer aufgebracht werden kann, weil der seitliche Freiraum für den Einsatz eines Hebels nicht gegeben ist.

Weil sich das Dichtelement, typischerweise ein Vierkantdichtring, bei den aus der Praxis bekannten Befestigungen zwischen Patronenbodenplatte und Gehäuse der Druckluftaufbereitungseinheit beim Verschrauben mitdrehen muss, kommt es zu großen Schwankungen durch unterschiedliche Reibungseinflüsse beim Anzugsmoment und zur Beschädigung oder zum Verdrehen des Dichtelements, was wiederum Leckagen zur Folge hat. Außerdem muss die axiale Verspannung der Verschraubung durch die Dichtung erzeugt werden.

Es ist somit eine Aufgabe der Erfindung, eine verbesserte Möglichkeit bereitzustellen, um eine Trockenmittelpatrone an einem Gehäuse einer Luftaufbereitungsanlage lösbar befestigen zu können, mit der Nachteile herkömmlicher Techniken vermieden werden können. Die Aufgabe der Erfindung ist es insbesondere, eine Befestigungsschnittstelle für eine Trockenmittelpatrone bereitzustellen, mittels derer die Patrone gegen ein Gehäuse der Luftaufbereitungsanlage, z. B. des Lufttrockners, abgedichtet befestigt und sicher und zuverlässig mit konstantem Kraftaufwand wieder gelöst werden kann.

Diese Aufgaben werden durch eine Vorrichtung mit den Merkmalen des unabhängigen Anspruchs gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß allgemeinen Gesichtspunkten der Erfindung wird eine Vorrichtung zur lösbaren Befestigung einer Trockenmittelpatrone an einem Gehäuseabschnitt einer Druckluftaufbereitungsanlage bzw. Lufttrocknungsanlage eines Fahrzeugs bereitgestellt. Die Vorrichtung stellt eine Schnittstelle bereit, um die Trockenmittelpatrone lösbar am Gehäuseabschnitt zu befestigen. Der Begriff Gehäuseabschnitt bezeichnet denjenigen Teil der Druckluftaufbereitungsanlage, an dem die Trockenmittelpatrone lösbar befestigt ist. Der Gehäuseabschnitt kann beispielsweise ein Gehäuse des Lufttrockners sein. Die Druckluftaufbereitungsanlage kann für eine Druckluftbremsanlage eines Fahrzeugs vorgesehen sein. Das Fahrzeug kann ein Nutzfahrzeug sein.

Die Trockenmittelpatrone, auch als Trocknungspatrone bezeichnet, umfasst in an sich bekannter Weise ein Patronengehäuse, in dem ein Trockenmittelbehälter gehaltert ist. Das Patronengehäuse hat einen Deckel, welcher das Patronengehäuse nach oben begrenzt und typischerweise becher- oder topfförmig ist, und ein Trägerelement, welches das Patronengehäuse nach unten begrenzt. Das Trägerelement ist in Montageposition am Gehäuseabschnitt der Druckluftaufbereitungsanlage lösbar befestigt und wird auch als Bodenplatte bezeichnet.

Die erfindungsgemäße Vorrichtung weist in Übereinstimmung mit dem Stand der Technik ein an dem Trägerelement angeordnetes Gewinde und ein an dem Gehäuseabschnitt angeordnetes Gegengewinde, z. B. in Form eines Außengewindes, zur Verschraubung der Trockenmittelpatrone am Gehäuseabschnitt auf. Um die Patrone im montierten Zustand gegen den Gehäuseabschnitt der Luftaufbereitungsanlage abzudichten, ist ferner zwischen dem Trägerelement und dem Gehäuseabschnitt ein Dichtelement, vorzugsweise eine Formdichtung, angeordnet, das verpresst und/oder verpressbar ist, um das Trägerelement am Gehäuseabschnitt gegenüber diesem abzudichten. Zur Abdichtung wird das Dichtelement hauptsächlich axial verpresst. Die Axialrichtung entspricht der Richtung der Verschraubungsachse bzw. der senkrecht auf dem Trägerelement stehenden Zentralachse der Trockenmittelpatrone.

Gemäß allgemeinen Gesichtspunkten der Erfindung ist das Dichtelement in einer Dichtungsnut des Gehäuseabschnitts angeordnet und über eine Fluidverbindung, die die Dichtungsnut mit einem mit Druck beaufschlagbaren Gehäuseraum der Druckluftaufbereitungsanlage fluidisch verbindet, mit einem Systemdruck der Druckluftaufbereitungsanlage beaufschlagbar, um die axiale Verpressung des Dichtelements zwischen dem Trägerelement und dem Gehäuseabschnitt zu erzeugen und/oder zu erhöhen.

Dies bietet den Vorzug, dass die eigentliche Dichtwirkung über die axiale Verpressung des Dichtelements nicht oder zumindest nicht nur über die Verschraubung, sondern hauptsächlich durch die auf das Dichtelement wirkende Druckbeaufschlagung erzeugt wird. Mit anderen Worten wirkt auf das Dichtelement im verschraubten, jedoch drucklosen Zustand entweder keine oder nur eine erste Axialkraft, die kleiner als die finale Axialkraft ist, die durch die Druckbeaufschlagung des Dichtelements mit dem Systemdruck über die Fluidverbindung entsteht. Hierzu ist das Dichtelement vorzugsweise so zwischen dem Gehäuseabschnitt und der Trockenmittelpatrone angeordnet, dass es bei Verschraubung des Trägerelements am Gehäuseabschnitt nicht oder nur geringfügig tordiert wird und/oder dass sich im am Gehäuseabschnitt verschraubten Zustand der Trockenmittelpatrone im drucklosen Zustand eine Grunddichtwirkung einstellt und sich bei der Druckbeaufschlagung des Dichtelements eine zweite Dichtwirkung einstellt, die höher als die Grunddichtwirkung ist.

Die Dichtungsnut ist hierbei vorzugsweise als im Gehäuseabschnitt vertiefte Dichtungsnut, weiter vorzugsweise als um die Zentralachse der Trockenmittelpatrone umlaufende Ringnut ausgeführt.

Gemäß einer besonders bevorzugten Ausführungsform umfasst die Vorrichtung einen Anschlag am Patronengehäuse, der bei Verschraubung des Patronengehäuses bis auf Anschlag auf den Gehäuseabschnitt der Druckluftaufbereitungsanlage verschraubbar ist, vorzugsweise ohne dass eine zusätzliche Axialkraft wie durch das axial verpresste Dichtelement entsteht. Der Anschlag kann als mindestens eine Anschlagfläche vorgesehen sein. Der Anschlag legt somit einen vorbestimmten Abstand von Dichtungsnut zur Anlagefläche des Gehäuse der Luftaufbereitungsanlage fest und dadurch die Axialkraft, die auf das Dichtelement in einem Zustand, in dem die Patrone auf Anschlag verschraubt ist und noch nicht mit Systemdruck beaufschlagt ist, wirkt. Die auf das Dichtelement wirkende Axialkraft ist somit in diesem Zustand unabhängig vom Anzugsmoment der Verschraubung.

Gemäß dieser Ausführungsform umfasst die Vorrichtung ferner eine plane Fläche des Trägerelements, nachfolgend auch als plane Dichtfläche bezeichnet, die bei Verschraubung bis zum Anschlag einen vorbestimmten Abstand zum Gehäuseabschnitt einnimmt und das Dichtelement überragt. Vorzugsweise ist die Vorrichtung so ausgebildet, dass die plane Fläche im bis zum Anschlag verschraubten Zustand und im drucklosen Zustand der Vorrichtung (d. h. einem Zustand, bei dem das Dichtelement nicht mit dem Systemdruck der Luftaufbereitungsanlage beaufschlagt ist) das Dichtelement nicht kontaktiert, um zu verhindern, dass sich das Dichtelement beim Verschrauben mitdreht und/oder tordiert wird. Die plane Dichtfläche liegt jedoch zumindest bei Druckbeaufschlagung des Dichtelements mit Systemdruck an dem Dichtelement an, da das Dichtelement dann gegen die plane Dichtfläche durch den anliegenden Druck gedrückt und axial verpresst wird, um den Anlagebereich abzudichten. Es wird jedoch betont, dass die Vorrichtung auch so ausgeführt werden kann, dass die plane Dichtfläche im bis zum Anschlag verschraubten Zustand und im drucklosen Zustand der Vorrichtung auch am Dichtelement anliegend kann, wenn das Dichtelement dadurch nur geringfügig axial verpresst und/oder nur leicht tordiert wird.

Die plane Dichtfläche kann ferner einen Spalt, insbesondere einen Ringspalt, z. B. einen radialen Ringspalt, zum Gehäuseabschnitt ausbilden, da die plane Dichtfläche aufgrund des Anschlags stets beanstandet zu dem gegenüberliegenden Gehäuseabschnitt der Druckluftaufbereitungsanlage ist.

Der Anschlag bzw. die Anschlagfläche stellt sicher, dass die Trockenmittelpatrone gegen einen harten Anschlag fest verschraubt werden kann und sich dabei sehr konstante Anzugsmomente und entsprechend konstante Lösemomente beim Patronentausch ergeben. Der Anschlag stellt ferner sicher, dass sich das Dichtelement beim Verschrauben der Trockenmittelpatrone mit dem Gehäuseabschnitt nicht mitdreht, d. h. höchstens geringfügig axial verpresst, jedoch nicht oder zumindest nur leicht tordiert wird.

Der Anschlag ist vorzugsweise ein metallisch harter Anschlag und kann als Bauteil der Trockenmittelpatrone, z. B. als ein Abschnitt des Trägerelements, insbesondere des Bodenblechs, ausgeführt sein. Der Anschlag kann radial innenliegend, radial außenliegend zur Dichtungsnut oder beidseits der Dichtungsnut angeordnet sein. Die Radialrichtung ist senkrecht zur vorstehend genannten Axialrichtung.

Gemäß einem weiteren, besonders bevorzugten Ausführungsbeispiel weist das Dichtelement ein Querschnittsprofil auf, das eine selbstverstärkende Dichtwirkung und/oder selbstverstärkende Geometrie unter Druck erzeugt. Beispielsweise kann das Dichtelement im Bereich seiner Anlagefläche an den Bodenbereich der Dichtungsnut vorstehende Wülste und eine Vertiefung zwischen den Wülsten, die über einem in die Dichtungsnut mündenden Endbereich der Fluidverbindung angeordnet ist, aufweist. Bei einer vorteilhaften Variante dieser Ausführungsform ist die Dichtungsnut eine Ringnut und das Dichtelement ein Dichtring, mit im Bereich seiner Anlagefläche an den unteren seitlichen Bereichen der Ringnut vorstehenden Wülsten und einer durch die Wülste ausgebildeten Vertiefung zwischen den Wülsten, die über einem Endbereich der Fluidverbindung angeordnet ist. Im in der Ringnut eingespannten Zustand wird der Dichtring bei Druckbeaufschlagung so deformiert, dass die Wülste noch stärker seitlich nach oben gegen die Randflächen der Ringnut gedrückt werden. Damit ist ein selbstverstärkender Effekt erzielt.

Ferner ist es vorteilhaft, wenn das Dichtelement im nicht-montierten Zustand der Trockenmittelpatrone aus einem dem Trägerelement zugewandten Randbereich der Dichtungsnut herausragt, so dass sich bereits im drucklosen Zustand durch das Anliegen der Dichtfläche an den herausragenden Bereich eine Grunddichtwirkung ergibt.

Die Fluidverbindung kann eine erste Fluidverbindung umfassen, die in einen Bodenbereich der Dichtungsnut mündet und diesen mit dem mit Druck beaufschlagbaren Gehäuseraum verbindet. Diese erste Fluidverbindung kann in Form eines Kanals, weiter vorzugsweise in Form einer Verbindungsbohrung, z. B. als Quer- oder Schrägbohrung, vorgesehen sein. Es ist jedoch besonders vorteilhaft, wenn die erste Fluidverbindung fallend von der Dichtungsnut in den Gehäuseraum verläuft, so dass der im Betrieb anfallende Öl-Wasser-Rückstand automatisch ablaufen kann. Ferner ist es vorteilhaft, wenn die erste Fluidverbindung in eine umlaufende Vertiefung, insbesondere in einen Ringkanal, mündet, der am Boden der Dichtungsnut vorhanden ist. Dadurch wird der Druck besser unter dem Dichtelement verteilt.

Diese umlaufende Vertiefung kann beispielsweise direkt beim Gießen des Gehäuses eingebracht werden, während die gesamte Dichtnut wahlweise beim Gießen oder erst beim anschließenden Zerspanen oder durch beide Verfahren hergestellt wird.

Im Rahmen der Erfindung besteht ferner die Möglichkeit, dass die Fluidverbindung eine zweite Fluidverbindung umfasst, die den Spalt umfasst und diesen mit dem mit Druck beaufschlagbaren Gehäuseraum fluidisch verbindet. Dadurch kann das Dichtelement nicht nur von unten über die erste Fluidverbindung, sondern auch seitlich über die zweite Fluidverbindung mit Druck beaufschlagt werden, um so die erzielbare Dichtwirkung zu erhöhen.

Ferner kann eine Nut oder Kerbe vorhanden sein, die zwischen der umgebenden Atmosphäre und einem zwischen der Anschlagfläche und dem Dichtelement liegenden Abschnitt des Spalts einen Druckausgleich ermöglicht. Die Nut oder Kerbe kann dabei wahlweise im Trägerelement der Trockenmittelpatrone oder im Gehäuseabschnitt vorhanden sein.

Das Trägerelement kann in an sich bekannter Weise eine Trägerplatte und ein Bördelblech aufweisen, wobei die Befestigung zwischen Trägerplatte und Deckel über das Bördelblech erfolgt. Die Trägerplatte weist eine Einströmöffnung und innerhalb des Gewindes eine zentrale Ausströmöffnung auf, wobei das Gewinde als Mutterngewinde ausgeführt sein kann, um das Trägerelement an einem Gegengewinde, z. B. einem Außengewinde, eines Gehäuses der Druckluftaufbereitungsanlage aufzuschrauben. Das Trägerelement bzw. die Trägerplatte kann z. B. zur Befestigung mit dem Gehäuseabschnitt, z. B. mit dem Trocknergehäuse, an einem die Trockenmittelpatrone axialmittig durchsetzenden Außengewinde des Gehäuseabschnitts löslich gehaltert sein.

Gemäß einer Ausführungsvariante weist das Bördelblech an einer Unterseite der Trägerplatte eine plane erste Stirnfläche, die die vorstehend beschriebene plane Fläche des Trägerelements ausbildet, und eine plane zweite Stirnfläche, die einen größeren Abstand von der Trägerplatte aufweist als die erste Stirnfläche, auf, wobei die zweite Stirnfläche die Anschlagfläche ausbildet.

Die Erfindung betrifft ferner eine Druckluftaufbereitungsanlage für ein Fahrzeug, insbesondere für ein Nutzfahrzeug, umfassend eine lösbar mit einem Gehäuseabschnitt der Druckluftaufbereitungsanlage verbindbare Trockenmittelpatrone, aufweisend ein Trockenmittelpatronengehäuse, mit einem Deckel, welcher das Trockenmittelpatronengehäuse nach oben begrenzt, und einem Trägerelement, welches das Trockenmittelpatronengehäuse nach unten begrenzt. Hierbei sind der Gehäuseabschnitt und die Trockenmittelpatrone über eine Vorrichtung, wie in diesem Dokument beschrieben, verbunden. Die Erfindung betrifft ferner ein Nutzfahrzeug mit einer solchen Vorrichtung und/oder einer solchen Druckluftaufbereitungsanlage.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: drei Darstellungen einer Vorrichtung zur lösbaren Befestigung einer Trockenmittelpatrone an einem Gehäuseabschnitt einer Luftaufbereitungsanlage gemäß einem Ausführungsbeispiel der Erfindung;
- Figur 2: eine Dichtungsnut gemäß einem Ausführungsbeispiel der Erfindung; und
- Figur 3: eine Vorrichtung zur lösbaren Befestigung einer Trockenmittelpatrone an einem Gehäuseabschnitt einer Luftaufbereitungsanlage gemäß einem weiteren Ausführungsbeispiel der Erfindung.

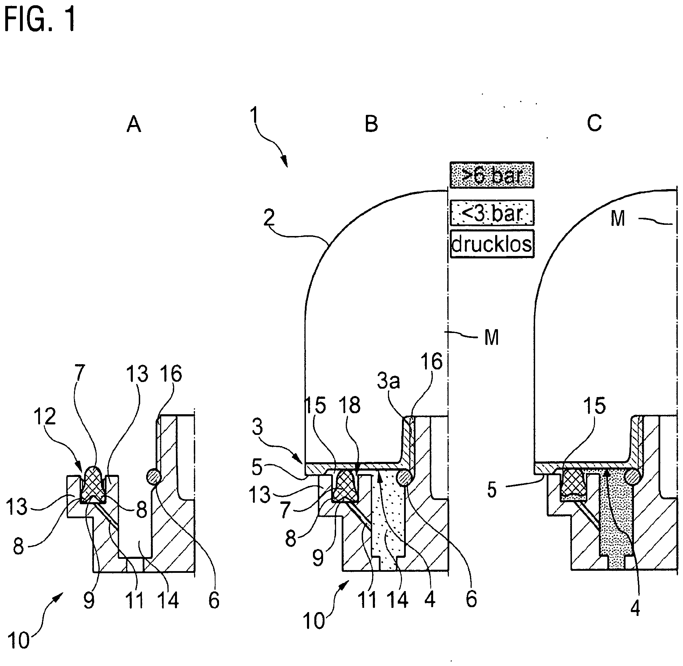

Figur 1 zeigt drei Darstellungen einer Befestigungsschnittstelle zur lösbaren Befestigung einer Trockenmittelpatrone an einem Gehäuseabschnitt einer Luftaufbereitungsanlage gemäß einem Ausführungsbeispiel der Erfindung. Hierbei zeigt Figur 1 in der Teilfigur A eine Schnittansicht eines Gehäuseabschnitts 10 eines Lufttrockners einer Druckluftaufbereitungsanlage eines Nutzfahrzeugs. Die Teilfiguren B und C zeigen jeweils den Gehäuseabschnitt 10 aus Teilfigur A mit einer darauf verschraubten Trockenmittelpatrone, wobei nur das Patronengehäuse ohne den Innenaufbau der Patrone, der in üblicher Weise ausgeführt sein kann, dargestellt ist.

Hier zeigt die Teilfigur B einen Zustand der Vorrichtung bei einem Systemdruck unter 3 bar und die Teilfigur C einen Zustand der Vorrichtung bei einem Systemdruck über 6 bar. Zur Vereinfachung der Darstellungen ist in den Teilfiguren A bis C jeweils nur eine der symmetrischen Hälften der Vorrichtung dargestellt. Der sich jeweils rechts von der Mittelachse M, die die Axialrichtung festlegt, befindliche und nicht dargestellte Teil der Vorrichtung zur Befestigung der Trockenmittelpatrone am Gehäuseabschnitt ist somit baugleich zu der dargestellten Hälfte.

Das Patronengehäuse der Trockenmittelpatrone hat einen topf- oder becherförmigen Deckel 2 (Patronengehäusedeckel), welcher das Patronengehäuse nach oben begrenzt, und ein Trägerelement 3, z. B. in Form einer Bodenplatte, welches das Patronengehäuse nach unten begrenzt. Das Trägerelement 3 ist in Montageposition, dargestellt in den Teilfiguren B und C, an einem Gehäuseabschnitt 10 des Lufttrockners der Druckluftaufbereitungsanlage 1 mittels eines Gewindes 3a, das vorliegend als Mutterngewinde ausgeführt ist, an einem die Trockenmittelpatrone axialmittig durchsetzenden Gegengewinde, insbesondere ein Außengewinde 16, des Gehäuseabschnitts 10 löslich gehaltert. Das Trägerelement 3 weist innerhalb des Gewindes 3a eine zentrale Ausströmöffnung auf, über die die getrocknete und gereinigte Luft die Trockenmittelpatrone verlässt.

Ein umlaufendes Dichtelement, vorliegend in Form einer Formdichtung 7, die zur Abdichtung der Trockenmittelpatrone gegenüber dem Gehäuseabschnitt 10 dient, ist in einer im Gehäuseabschnitt 10 vertieften Ringnut 12 angeordnet, deren Schenkel mit 13 bezeichnet sind. Die Formdichtung 7 ragt im nicht-montierten Zustand der Trockenmittelpatrone aus einem dem Trägerelement 3 zugewandten Randbereich der Dichtungsnut 12 heraus, was in der Teilfigur A erkennbar ist. Die Bodenbereich der Dichtungsnut 12 ist über eine fallende Verbindungsbohrung 11 mit einem mit Druck beaufschlagbaren Gehäuseraum 14 der Druckluftaufbereitungsanlage 1 fluidisch verbunden. Dadurch kann bei Betrieb der Druckluftaufbereitungsanlage 1 die Formdichtung über die Verbindungsbohrung 11 mit dem Systemluftdruck der Druckluftaufbereitungsanlage beaufschlagt werden.

Die Unterseite des Trägerelements weist eine Anschlagfläche 5 auf, die bei Verschraubung des Patronengehäuses bis auf Anschlag auf den Gehäuseabschnitt 10 der Druckluftaufbereitungsanlage 1 verschraubbar ist und so im verschraubten Zustand einen definierten Abstand des Trägerelements 3 zum Gehäuseabschnitt festlegt. An die Anschlagfläche 5 schließt sich radial innenliegend eine ebene Dichtfläche 4 an, die aufgrund der Anschlagfläche bei Verschraubung des Patronengehäuses bis auf Anschlag einen vorbestimmten Abstand zum Gehäuseabschnitt aufweist und dabei die Formdichtung überdeckt. Die Dichtfläche 4 ist in Axialrichtung M so zum Anschlag 5 angeordnet, dass die Dichtfläche 4 im bis zum Anschlag verschraubten Zustand und im drucklosen Zustand der Vorrichtung (d. h. einem Zustand, bei dem die Formdichtung 7 nicht mit dem Systemdruck der Luftaufbereitungsanlage beaufschlagt ist) die Formdichtung 7 gerade nicht berührt. Dadurch wird verhindert, dass sich die Formdichtung 7 beim Verschrauben mitdreht und/oder tordiert wird. Stattdessen bestimmt der Anschlag 5 im Wesentlichen das Anzugsmoment und Lösemoment der Verschraubung.

Die ebene Dichtfläche 4 liegt jedoch zumindest bei Druckbeaufschlagung der Formdichtung mit Systemdruck, hier einem Druck größer 6 bar wie in Teilfigur C dargestellt, an der Formdichtung an, da die Formdichtung 7 dann gegen die ebene Dichtfläche 4 durch den anliegenden Druck axial verpresst wird.

Im auf Anschlag verschraubten Zustand bildet sich ein radialer Ringspalt 18 bedingt durch den Anschlag 5 zwischen der ebenen Dichtfläche 4 und dem gegenüberliegenden Gehäuseabschnitt aus, der im vorliegenden Ausführungsbeispiel radial außen von dem Anschlag 5 und radial innen von einem O-Ring 6 begrenzt wird. Der zwischen der Formdichtung 6 und dem Anschlag 5 liegende Bereich 15 des Ringspalts 18 weist eine Kerbe oder eine weitere Nut auf (nicht dargestellt), die zwischen der umgebenden Atmosphäre und dem Bereich 15 einen Druckausgleich ermöglicht. Der Bereich 15 ist somit immer drucklos, d. h. auf Atmosphärendruck. Der zu der Formdichtung 7 radial innen liegende Bereich des Ringspalts 18 ist dagegen fluidisch ebenfalls mit dem Gehäuseraum 14 verbunden (zweite Fluidverbindung), so dass bei Druckbeaufschlagung die Formdichtung 7 zusätzlich über den Ringspalt 18 übermittelten Luftdruck radial verpresst wird.

Die Formdichtung 7 weist ein Querschnittsprofil auf, das eine selbstverstärkende Dichtwirkung und/oder selbstverstärkende Geometrie unter Druck erzeugt. Vorliegend weist die in der Ringnut 12 liegende Formdichtung 7 in Form eines Dichtrings im Bereich ihrer Anlagefläche an die unteren seitlichen Bereiche der Ringnut 12 zwei vorstehende Wülste 8 auf und eine durch diese Wülste 8 ausgebildete Vertiefung 9 zwischen den Wülsten 8. Die Vertiefung 9 liegt über einem Endbereich der Verbindungsbohrung 11. Im in der Ringnut 12 eingespannten Zustand wird der Dichtring bei Druckbeaufschlagung so deformiert, so dass die Wülste 8 noch stärker seitlich nach oben gegen die Randflächen der Schenkel 13 der Ringnut 12 gedrückt werden. Damit wird ein selbstverstärkender Effekt erzielt.

Teilfigur C zeigt den Zustand der Vorrichtung bei Beaufschlagung mit Systemdruck. Die unteren Wülste 8 der Formdichtung 7 werden nach oben und seitlich nach außen gepresst, und die Oberseite der Formdichtung wird axial gegen die ebene Dichtfläche 4 verpresst. Ferner wird die Formdichtung 7 aufgrund der zusätzlichen seitlichen Druckbeaufschlagung über den rechten Bereich des Ringspalts 18 im radial innen liegenden oberen Bereich deformiert. Die eigentliche Dichtwirkung stellt sich somit erst durch die Druckbeaufschlagung der Formdichtung 7 ein und nicht schon bei der Verschraubung im drucklosen Zustand.

Zusammengefasst wird mit der vorgeschlagenen Befestigungsschnittstelle das Dichtelement (Formdichtung 7) beim Festziehen bestenfalls axial verpresst, jedoch nicht oder zumindest nur leicht tordiert. Die eigentliche Dichtwirkung entsteht erst bei Druckbeaufschlagung. Zudem kann die Patrone gegen einen harten Anschlag fest verschraubt werden, was konstante Anzugsmomente und entsprechend auch konstante Lösemomente beim Patronentausch ermöglicht. Damit kann eine höhere Sicherheit im Betrieb als auch eine größere Servicefreundlichkeit beim Patronentausch gewährleistet werden, weil das Dichtelement (heute typischerweise ein Vierkantdichtring) beim Verschrauben nicht mitdrehen muss. Schwankungen durch unterschiedliche Reibungseinflüsse beim Anzugsmoment werden vermieden. Beschädigungen oder Verdrehen des Dichtelements, weil es gehäusefest ist und noch nicht vollständig verpresst ist, solange kein Druck ansteht, können ebenfalls vermieden oder zumindest signifikant reduziert werden.

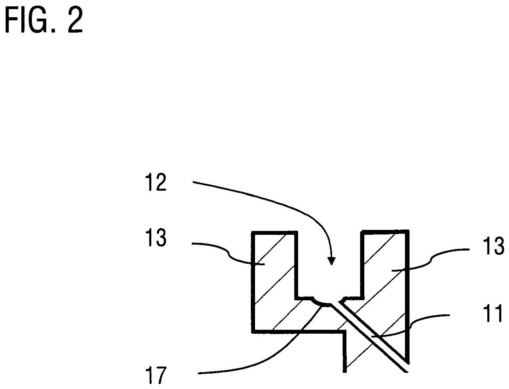

Figur 2 zeigt eine weitere Ausführungsvariante der Dichtungsnut. Gleiche oder funktional äquivalente Elemente zur Figur 1 sind mit denselben Bezugszeichen bezeichnet. Die Besonderheit dieser Variante ist die umlaufende Vertiefung 17 in Form eines Ringkanals, in den die Verbindungsbohrung 11 mündet, und die am Boden der als Ringnut ausgeführten Dichtungsnut 12 vorhanden ist. Dadurch wird der Luftdruck besser unter dem Dichtelement 7 verteilt und eine bessere axiale Verspannung ermöglicht.

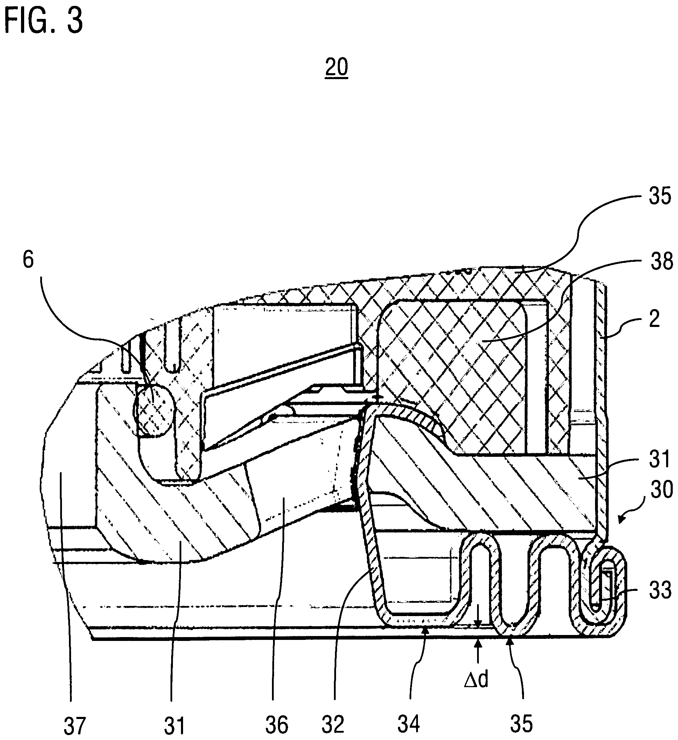

Figur 3 zeigt eine Vorrichtung zur lösbaren Befestigung einer Trockenmittelpatrone 20 an einem Gehäuseabschnitt einer Luftaufbereitungsanlage gemäß einem weiteren Ausführungsbeispiel der Erfindung. Figur 3 zeigt einen vergrößerten Ausschnitt eines radial außenliegenden unteren Bereichs der Trockenmittelpatrone 20. Der innere Aufbau der Trockenmittelpatrone 20 kann in an sich bekannter Weise ausgeführt sein, beispielsweise wie in den den Offenlegungsschriften DE 10 2013 103 066 A1, DE 10 2012 105 137 A1 sowie der DE 10 2007 034 435 A1 beschrieben. Mit dem Bezugszeichen 38 ist der durch einen Flies gebildete Ölfilter 38 und mit dem Bezugszeichen 35 ein Teil des Innenbehälters für das Trockenmittel bezeichnet. Das Trägerelement ist ebenfalls wie in den Offenlegungsschriften DE 10 2013 103 066 A1, DE 10 2012 105 137 A1 sowie der DE 10 2007 034 435 A1 beschrieben, aus einer Trägerplatte 31 und einem Bördelblech 32 gebildet, wobei die Befestigung zwischen Trägerplatte 31 und dem topfförmigen Patronengehäusedeckel 2 der Trockenmittelpatrone über das Bördelblech 32 erfolgt, indem Patronengehäusedeckel 2 und Bördelblech 32 miteinander verbördelt werden, um den Patronenfalz 33 auszubilden. Ferner ist in Figur 3 die Lufteinströmöffnung 36 in der Trägerplatte 31 sowie die zentrale Luftausströmöffnung 37 erkennbar.

Die Besonderheit dieser Ausführungsvariante liegt darin, dass das Bördelblech 32 an einer Unterseite der Trägerplatte 31 an einer Unterseite eine plane erste Stirnfläche 34 an einer Bördelung aufweist, die die plane Dichtfläche des Trägerelements ausbildet. Ferner, dass das Bördelblech 32 an einer Unterseite einer weiteren Bördelung eine plane zweite Stirnfläche 35 aufweist, die einen größeren Abstand von der Trägerplatte 31 aufweist als die erste Stirnfläche und die Anschlagsfläche für die Verschraubung ausbildet. Mit anderen Worten entspricht die Fläche 35 der Anschlagfläche 5 der Figur 1 und die Fläche 34 der Dichtfläche 4 der Figur 1. Der mit Δd gekennzeichnete Überstand entspricht dem Abstand der Fläche 34 von dem Gehäuseabschnitt 10 der Luftaufbereitungsanlage (in Figur 3 nicht dargestellt) im auf Anschlag verschraubten Zustand.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Druckluftaufbereitungsanlage
- 2: Patronengehäusedeckel
- 3, 30: Trägerelement (Patronengehäuseboden)
- 3a: Gewinde, z. B. Mutterngewinde
- 4, 34: Plane Dichtfläche
- 5, 35: Anschlag
- 6: Dichtring
- 7: Dichtelement, z. B. Formdichtung
- 8: Wulst
- 9: Vertiefung
- 10: Gehäuseabschnitt der Druckluftaufbereitungsanlage
- 11: Verbindungsbohrung
- 12: Dichtungsnut
- 13: Schenkel der Dichtungsnut
- 14: Mit Druck beaufschlagbarer Gehäuseraum der Druckluftaufbereitungsanlage
- 15: Druckloser Bereich (Atmosphärendruck)
- 16: Gegengewinde, z. B. Außengewinde
- 17: Ringkanal
- 18: Ringspalt
- 20: Trockenmittelpatrone
- 31: Trägerplatte
- 32: Bördelblech
- 33: gebördelter Patronenfalz
- 35: Innenbehälter für Trockenmittel
- 36: Einströmöffnung
- 37: Ausströmöffnung
- 38: Ölfilter
- Δd: Überstand Anschlag vs. Dichtfläche

## Patentansprüche

1. Vorrichtung zur lösbaren Befestigung einer Trockenmittelpatrone an einem Gehäuseabschnitt (10) einer Druckluftaufbereitungsanlage (1) eines Fahrzeugs, insbesondere eines Nutzfahrzeugs, wobei die Trockenmittelpatrone ein Patronengehäuse aufweist, mit einem Deckel (2), welcher das Patronengehäuse nach oben begrenzt, und einem Trägerelement (3; 30), welches das Patronengehäuse nach unten begrenzt und in Montageposition am Gehäuseabschnitt (10) der Druckluftaufbereitungsanlage (1) lösbar befestigt ist,
wobei die Vorrichtung umfasst:
ein an dem Trägerelement (3) angeordnetes Gewinde (3a) und ein an dem Gehäuseabschnitt (10) angeordnetes Gegengewinde (16) zur Verschraubung der Trockenmittelpatrone am Gehäuseabschnitt (10);
ein zwischen dem Trägerelement (3; 30) und dem Gehäuseabschnitt (10) angeordnetes, verpresstes und/oder verpressbares Dichtelement (7), um das Trägerelement (3) am Gehäuseabschnitt (10) gegenüber diesem abzudichten,
**dadurch gekennzeichnet,**
**dass** das Dichtelement (7) in einer Dichtungsnut (12) des Gehäuseabschnitts (10) angeordnet ist und über eine Fluidverbindung (11), die die Dichtungsnut mit einem mit Druck beaufschlagbaren Gehäuseraum (14) der Druckluftaufbereitungsanlage (1) fluidisch verbindet, mit einem Systemdruck der Druckluftaufbereitungsanlage beaufschlagbar ist, um die axiale Verpressung des Dichtelements (7) zwischen dem Trägerelement (3; 30) und dem Gehäuseabschnitt (10) zu erzeugen und/oder zu erhöhen.

2. Vorrichtung nach Anspruch 1, **gekennzeichnet durch**
(a) einen Anschlag (5; 35) am Patronengehäuse, der bei Verschraubung des Patronengehäuses bis auf Anschlag auf den Gehäuseabschnitt (10) der Druckluftaufbereitungsanlage (1) verschraubbar ist und im auf Anschlag verschraubten Zustand eine vorbestimmte axiale Endlage der Dichtungsnut (12) zum Gehäuseabschnitt festlegt, und
(b) eine plane Dichtfläche (4; 34) des Trägerelements (3; 30), die bei Verschraubung des Patronengehäuses bis auf Anschlag einen vorbestimmten Abstand zum Gehäuseabschnitt einnimmt und am Dichtelement (7) zumindest bei Druckbeaufschlagung des Dichtelements (7) mit Systemdruck anliegt und vorzugsweise einen Spalt, insbesondere einen Ringspalt (18), zum Gehäuseabschnitt (10) ausbildet.

3. Vorrichtung nach Anspruch 1 oder 2, **dadurch gekennzeichnet, dass** das Dichtelement (7) ein Querschnittsprofil aufweist, das eine selbstverstärkende Dichtwirkung und/oder selbstverstärkende Geometrie unter Druck erzeugt.

4. Vorrichtung nach einem der vorhergehenden Ansprüche, **dadurch gekennzeichnet, dass** das Dichtelement (7) im Bereich seiner Anlagefläche an den Bodenbereich der Dichtungsnut (12) vorstehende Wülste (8) und eine Vertiefung (9) zwischen den Wülsten (8), die über einem in die Dichtungsnut (12) mündenden Endbereich der Fluidverbindung angeordnet ist, aufweist.

5. Vorrichtung nach einem der vorhergehenden Ansprüche, **dadurch gekennzeichnet, dass** das Dichtelement (7) im nicht-montierten Zustand der Trockenmittelpatrone aus einem dem Trägerelement (3; 30) zugewandten Randbereich der Dichtungsnut (12) herausragt.

6. Vorrichtung nach einem der vorhergehenden Ansprüche, **dadurch gekennzeichnet, dass** die Fluidverbindung eine erste Fluidverbindung (11) umfasst, die in einen Bodenbereich der Dichtungsnut (12) mündet und diesen mit dem mit Druck beaufschlagbaren Gehäuseraum (14) verbindet.

7. Vorrichtung nach Anspruch 6, **dadurch gekennzeichnet, dass** die erste Fluidverbindung
(a) in Form eines Kanals, insbesondere in Form einer Verbindungsbohrung (11) vorgesehen ist; und/oder
(b) fallend von der Dichtungsnut (12) in den Gehäuseraum (14) verläuft; und/oder
(c) in eine umlaufende Vertiefung (17) mündet, die im Boden der Dichtungsnut (12) vorhanden ist, vorzugsweise in einen umlaufenden Ringkanal mündet, der im Boden der als Ringnut ausgeführten Dichtungsnut vorhanden ist.

8. Vorrichtung nach einem der Ansprüche 2 bis 7, **dadurch gekennzeichnet, dass** die Fluidverbindung eine zweite Fluidverbindung umfasst, die den Spalt (18) umfasst und diesen mit dem mit Druck beaufschlagbaren Gehäuseraum fluidisch verbindet.

9. Vorrichtung nach einer der Ansprüche 2 bis 8, **gekennzeichnet durch** eine Nut oder Kerbe, die zwischen der umgebenden Atmosphäre und einem zwischen dem Anschlag und dem Dichtelement liegenden Abschnitt des Spalts einen Druckausgleich ermöglicht.

10. Vorrichtung nach einem der vorhergehenden Ansprüche, **dadurch gekennzeichnet, dass** das Trägerelement (30) eine Trägerplatte (31) und ein Bördelblech (32) aufweist, wobei die Befestigung zwischen Trägerplatte (31) und Deckel (2) über das Bördelblech (32) erfolgt.

11. Vorrichtung nach Anspruch 10, **dadurch gekennzeichnet, dass** das Bördelblech (32) an einer Unterseite der Trägerplatte
(a) eine plane erste Stirnfläche (34) aufweist, die die plane Fläche des Trägerelements ausbildet; und
(b) eine plane zweite Stirnfläche (35) aufweist, die einen größeren Abstand von der Trägerplatte aufweist als die erste Stirnfläche und die Anschlagsfläche ausbildet.

12. Druckluftaufbereitungsanlage (1) für ein Fahrzeug, insbesondere für ein Nutzfahrzeug, umfassend eine lösbar mit einem Gehäuseabschnitt (10) der Druckluftaufbereitungsanlage (1) verbindbare Trockenmittelpatrone, aufweisend ein Trockenmittelpatronengehäuse, mit einem Deckel (2), welcher das Trockenmittelpatronengehäuse nach oben begrenzt, und einem Trägerelement (3; 30), welches das Trockenmittelpatronengehäuse nach unten begrenzt, **dadurch gekennzeichnet, dass** der Gehäuseabschnitt (10) und die Trockenmittelpatrone über eine Vorrichtung nach einem der Ansprüche 1 bis 10 miteinander verbunden sind.

## Claims

1. A device for the detachable fastening of a drying agent cartridge to a housing section (10) of a compressed-air treatment installation (1) of a vehicle, in particular of a utility vehicle, wherein the drying agent cartridge has a cartridge housing with a cover (2), which delimits the cartridge housing in an upward direction, and with a carrier element (3; 30) which delimits the cartridge housing in a downward direction and which, in an installed position, is detachably fastened to the housing section (10) of the compressed-air treatment installation (1),
wherein the device comprises:
a thread (3a), which is arranged on the carrier element (3), and a counterpart thread (16), which is arranged on the housing section (10), for the screw connection of the drying agent cartridge to the housing section (10);
a compressed and/or compressible sealing element (7), which is arranged between the carrier element (3; 30) and the housing section (10), for sealing off the carrier element (3) on the housing section (10) with respect to said housing section, **characterized**
**in that** the sealing element (7) is arranged in a seal groove (12) of the housing section (10) and, via a fluidic connection (11) which fluidically connects the seal groove to a pressurizable housing chamber (14) of the compressed-air treatment installation (1), can be acted on with a system pressure of the compressed-air treatment installation in order to generate and/or increase the axial compression of the sealing element (7) between the carrier element (3; 30) and the housing section (10).

2. The device according to Claim 1, **characterized by**
(a) an abutment (5; 35) on the cartridge housing, which abutment, during the screwing-on of the cartridge housing, can be screwed on as far as a point of abutment against the housing section (10) of the compressed-air treatment installation (1), and, in the state in which screwing-on has been performed as far as a point of abutment, defines a predetermined axial end position of the seal groove (12) relative to the housing section, and
(b) a planar sealing surface (4; 34) of the carrier element (3; 30), which sealing surface, during the screwing-on of the cartridge housing as far as a point of abutment, assumes a predetermined spacing to the housing section and bears against the sealing element (7) at least in the event of action of system pressure on the sealing element (7) and preferably forms a gap, in particular a ring-shaped gap (18), relative to the housing section (10).

3. The device according to Claim 1 or 2, **characterized in that** the sealing element (7) has a cross-sectional profile which generates a self-boosting sealing action and/or a self-reinforcing geometry under pressure.

4. The device according to one of the preceding claims, **characterized in that** the sealing element (7) has, in the region of its abutment surface against the base region of the seal groove (12), protruding beads (8) and a depression (9) between the beads (8), which depression is arranged above an end region, which opens into the seal groove (12), of the fluidic connection.

5. The device according to one of the preceding claims, **characterized in that**, in the non-installed state of the drying agent cartridge, the sealing element (7) projects out of an edge region, facing toward the carrier element (3; 30), of the seal groove (12).

6. The device according to one of the preceding claims, **characterized in that** the fluidic connection comprises a first fluidic connection (11) which opens into a base region of the seal groove (12) and connects said seal groove to the pressurizable housing chamber (14).

7. The device according to Claim 6, **characterized in that** the first fluidic connection
(a) is provided in the form of a duct, in particular in the form of a connecting bore (11); and/or
(b) runs in downwardly sloping fashion from the seal groove (12) into the housing chamber (14); and/or
(c) opens into an encircling depression (17) which is provided in the base of the seal groove (12), preferably into an encircling ring-shaped duct which is provided in the base of the seal groove formed as a ring-shaped groove.

8. The device according to one of Claims 2 to 7, **characterized in that** the fluidic connection comprises a second fluidic connection which comprises the gap (18) and which fluidically connects the latter to the pressurizable housing chamber.

9. The device according to one of Claims 2 to 8, **characterized by** a groove or notch which permits pressure equalization between the surrounding atmosphere and a section, situated between the abutment and the sealing element, of the gap.

10. The device according to one of the preceding claims, **characterized in that** the carrier element (30) has a carrier panel (31) and a crimped plate (32), wherein the fastening between the carrier panel (31) and cover (2) is realized by way of the crimped plate (32).

11. The device according to Claim 10, **characterized in that** the crimped plate (32), on an underside of the carrier panel,
(a) has a planar first face surface (34) which forms the planar surface of the carrier element; and
(b) has a planar second face surface (35) which has a greater spacing from the carrier panel than the first face surface and which forms the abutment surface.

12. A compressed-air treatment installation (1) for a vehicle, in particular for a utility vehicle, comprising a drying agent cartridge which is detachably connectable to a housing section (10) of the compressed-air treatment installation (1), having a drying agent cartridge housing with a cover (2), which delimits the drying agent cartridge housing in an upward direction, and with a carrier element (3; 30) which delimits the drying agent cartridge housing in a downward direction, **characterized in that** the housing section (10) and the drying agent cartridge are connected to one another by way of a device according to one of Claims 1 to 10.

## Revendications

1. Dispositif de fixation amovible d'une cartouche d'agent dessiccatif sur une section de boîtier (10) d'une installation de traitement d'air comprimé (1) d'un véhicule, en particulier d'un véhicule utilitaire, la cartouche d'agent dessiccatif présentant un boîtier de cartouche avec un couvercle (2) qui limite le boîtier de cartouche vers le haut, et un élément de support (3 ; 30) qui limite le boîtier de cartouche vers le bas, et qui est fixé, dans la position de montage, de manière amovible sur la section de boîtier (10) de l'installation de traitement d'air comprimé (1),
le dispositif comprenant :
un filetage (3a) disposé sur l'élément de support (3) et un filetage conjugué (16) disposé sur la section de boîtier (10) pour visser la cartouche d'agent dessiccatif sur la section de boîtier (10) ;
un élément d'étanchéité (7) disposé entre l'élément de support (3 ; 30) et la section de boîtier (10), pressé et/ou pouvant être pressé, afin d'étanchéifier l'élément de support (3) sur la section de boîtier (10) par rapport à celle-ci, **caractérisé en ce que**
l'élément d'étanchéité (7) est disposé dans une rainure d'étanchéité (12) de la section de boîtier (10) et peut être sollicité avec une pression de système de l'installation de traitement d'air comprimé, par le biais d'une liaison fluidique (11) qui relie fluidiquement la rainure d'étanchéité à un espace de boîtier (14) de l'installation de traitement d'air comprimé (1) pouvant être sollicité en pression, afin de générer et/ou d'augmenter la compression axiale de l'élément d'étanchéité (7) entre l'élément de support (3 ; 30) et la section de boîtier (10).

2. Dispositif selon la revendication 1, **caractérisé par**
(a) une butée (5 ; 35) sur le boîtier de cartouche, qui, lors du vissage du boîtier de cartouche peut être vissée jusqu'à venir en butée sur la section de boîtier (10) de l'installation de traitement d'air comprimé (1) et, dans l'état vissé jusqu'en butée, établit une position d'extrémité axiale prédéterminée de la rainure d'étanchéité (12) par rapport à la section de boîtier, et
(b) une surface d'étanchéité plane (4 ; 34) de l'élément de support (3 ; 30), qui, lorsque le boîtier de cartouche est vissé jusqu'à venir en butée, est disposée à une distance prédéterminée par rapport à la section de boîtier et s'applique contre l'élément d'étanchéité (7) au moins lors de la sollicitation en pression de l'élément d'étanchéité (7) avec la pression de système, et constitue de préférence une fente, en particulier une fente annulaire (18) par rapport à la section de boîtier (10).

3. Dispositif selon la revendication 1 ou 2, **caractérisé en ce que** l'élément d'étanchéité (7) présente un profil en section transversale qui génère un effet d'étanchéité se renforçant de lui-même et/ou une géométrie se renforçant d'elle-même sous pression.

4. Dispositif selon l'une quelconque des revendications précédentes, **caractérisé en ce que** l'élément d'étanchéité (7) présente des bourrelets (8) faisant saillie dans la région de sa surface d'appui contre la région de fond de la rainure d'étanchéité (12) et un renfoncement (9) entre les bourrelets (8), qui est disposé par-dessus une région d'extrémité de la liaison fluidique débouchant dans la rainure d'étanchéité (12).

5. Dispositif selon l'une quelconque des revendications précédentes, **caractérisé en ce que** l'élément d'étanchéité (7), dans l'état non monté de la cartouche d'agent dessiccatif, fait saillie hors d'une région de bord de la rainure d'étanchéité (12) tournée vers l'élément de support (3 ; 30).

6. Dispositif selon l'une quelconque des revendications précédentes, **caractérisé en ce que** la liaison fluidique comprend une première liaison fluidique (11) qui débouche dans une région de fond de la rainure d'étanchéité (12) et qui relie celle-ci à l'espace de boîtier (14) pouvant être sollicité en pression.

7. Dispositif selon la revendication 6, **caractérisé en ce que** la première liaison fluidique
(a) est prévue sous la forme d'un canal, en particulier sous la forme d'un alésage de liaison (11) ; et/ou
(b) s'étend en descendant depuis la rainure d'étanchéité (12) dans l'espace de boîtier (14) ; et/ou
(c) débouche dans un renfoncement périphérique (17) qui est prévu dans le fond de la rainure d'étanchéité (12), de préférence débouche dans un canal annulaire périphérique qui est prévu dans le fond de la rainure d'étanchéité réalisée sous forme de rainure annulaire.

8. Dispositif selon l'une quelconque des revendications 2 à 7, **caractérisé en ce que** la liaison fluidique comprend une deuxième liaison fluidique qui comprend la fente (18) et qui relie fluidiquement celle-ci à l'espace de boîtier pouvant être sollicité en pression.

9. Dispositif selon l'une quelconque des revendications 2 à 8, **caractérisé par** une rainure ou une encoche qui permet un équilibrage de la pression entre l'atmosphère environnante et une section de la fente située entre la butée et l'élément d'étanchéité.

10. Dispositif selon l'une quelconque des revendications précédentes, **caractérisé en ce que** l'élément de support (30) présente une plaque de support (31) et une tôle de rabattement (32), la fixation entre la plaque de support (31) et le couvercle (2) s'effectuant par le biais de la tôle de rabattement (32).

11. Dispositif selon la revendication 10, **caractérisé en ce que** la tôle de rabattement (32) présente, au niveau d'un côté inférieur de la plaque de support,
(a) une première surface frontale plane (34) qui constitue la surface plane de l'élément de support ; et
(b) une deuxième surface frontale plane (35) qui présente une plus grande distance à la plaque de support que la première surface frontale et qui constitue la surface de butée.

12. Installation de traitement d'air comprimé (1) pour un véhicule, en particulier pour un véhicule utilitaire, comprenant une cartouche d'agent dessiccatif pouvant être connectée de manière amovible à une section de boîtier (10) de l'installation de traitement d'air comprimé (1), présentant un boîtier de cartouche d'agent dessiccatif, avec un couvercle (2) qui limite le boîtier de cartouche vers le haut, et un élément de support (3 ; 30) qui limite le boîtier de cartouche vers le bas, **caractérisée en ce que** la section de boîtier (10) et la cartouche d'agent dessiccatif sont reliées l'une à l'autre par le biais d'un dispositif selon l'une quelconque des revendications 1 à 10.
